# EUROPÄISCHE PATENTSCHRIFT

(11) **EP 3 747 643 B1**
(45) Veröffentlichungstag und Bekanntmachung des Hinweises auf die Patenterteilung: **21.09.2022**
(21) Anmeldenummer: 20168409.9
(22) Anmeldetag: 07.04.2020
(51) Int. Cl.: B30B 9/30, B65G 65/23

(54) **BALLENPRESSE MIT PRESSGUTZUFÖRDERVORRICHTUNG**
BALING PRESS WITH MATERIAL FEEDING DEVICE
PRESSE À BALLES AVEC DISPOSITIF D' ALIMENTATION DE MATIÈRE À PRESSER

(30) Priorität: 15.04.2019 DE 102019109899
(43) Veröffentlichungstag der Anmeldung: 09.12.2020
(73) Patentinhaber: Strautmann Gépgyártó Hungária KFT, 3143 Mátranovák (HU)
(72) Erfinder: STRAUTMANN, Wolfgang, 49196 Bad Laer (DE); STRAUTMANN, Dominik, 48151 Münster (DE); STRAUTMANN, Philipp, 49080 Osnabrück (DE)
(74) Vertreter: Dr. Träger & Strautmann PAe PartG mbB

(56) Entgegenhaltungen:
- CA-A- 906 830
- CN-U- 206 748 833
- DE-A1-102017 108 631
- DE-B- 1 217 872
- US-A- 2 573 584
- US-A1- 2009 202 325

## Beschreibung

Die vorliegende Erfindung betrifft eine Ballenpresse mit einer Presskammer, mit einer Beschickungsöffnung zum Einbringen von zu pressendem Pressgut in die Presskammer, mit einem in der Presskammer mit vertikaler Pressrichtung verfahrbaren Pressstempel, mit einer Presskammertür zum Entnehmen eines fertig gepressten Pressballens aus der Presskammer und mit einer Pressgutzufördervorrichtung, wobei die Pressgutzufördervorrichtung einen Pressgutraum, in welchen zu pressendes Pressgut eingebbar ist, und Fördermittel, mittels welchen das Pressgut aus dem Pressgutraum heraus abförderbar und der Beschickungsöffnung der Ballenpresse zuförderbar ist, aufweist.

Das Dokument DE 10 2007 021 097 A1 zeigt eine Presse mit einer Beschickungseinrichtung, wobei die Presse insbesondere zum Verpressen von Rest- oder Wertstoffe bildendem Pressgut, wie Altpapier, Kartonagen, Kunststoffflaschen, Folien und dergleichen, ausgeführt ist und ein Pressengehäuse mit einer Presskammer darin, mit einer Beschickungsöffnung zum Einfüllen des Pressgutes und mit einem in der Presskammer verfahrbaren Pressschild aufweist. Wesentlich ist hier, dass die Beschickungseinrichtung mindestens eine mit Förderzinken besetzte, drehantreibbare Rotorwalze umfasst, die vor und/oder in der Beschickungsöffnung der Presse angeordnet ist und mittels deren Drehung Pressgut von außerhalb des Pressengehäuses durch die Beschickungsöffnung in die Presskammer förderbar ist. Die Beschickungseinrichtung kann einen der Rotorwalze vorgeschalteten Einfüllraum aufweisen, in den das zu verpressende Pressgut einlegbar oder einwerfbar ist und aus dem das Pressgut von der Rotorwalze in die Presskammer förderbar ist. Im Einfüllraum kann eine Fördereinrichtung angeordnet sein, mit der in den Einfüllraum eingebrachtes Pressgut einem Pressgutannahmebereich der Rotorwalze zuführbar ist. Der Einfüllraum kann einen flachen Boden haben und die Fördereinrichtung kann durch ein im Einfüllraum mittels eines Kraftantriebes linear verfahrbares Förderschild gebildet sein. Alternativ kann der Einfüllraum einen in Form eines Zylindermantelabschnitts gebogenen Boden haben und die Fördereinrichtung kann durch ein im Einfüllraum mittels eines Kraftantriebes verschwenkbares Förderschild gebildet sein, dessen Schwenkachse mit einer Mittelachse des Zylindermantelabschnitts zusammenfällt. Gemäß weiteren Alternativen kann die Fördereinrichtung aus einer Anordnung einer oder mehrerer antreibbarer Förderketten oder aus einem antreibbaren Kratzbodenförderer oder aus antreibbaren Förderschnecken bestehen.

Das Dokument DE 20 2017 100 780 U1 zeigt eine Pressgutzufördereinrichtung für eine Presse, mit einem Pressgutvorratsbehälter, in den zu pressendes Pressgut eingebbar ist, mit einem an einem im Einbauzustand pressenseitigen Ausgang des Pressgutvorratsbehälters angeordneten, drehantreibbaren Befüllrotor und mit einem im Pressgutvorratsbehälter relativ zum Befüllrotor hin und her bewegbaren Förderelement mit einer dem Befüllrotor zugewandten, Pressgut dem Befüllrotor zufördernden Frontfläche, die eine an eine Außenumfangskontur des Befüllrotors formangepasste Kontur aufweist. Der Pressgutvorratsbehälter besitzt entweder einen ebenen, horizontalen oder zum Befüllrotor hin ansteigenden Boden und hat als Förderelement einen mittels eines Kraftantriebs linear entlang der Oberfläche des Bodens vor und zurück verfahrbaren Förderschieber oder der Pressgutvorratsbehälter weist einen Boden auf, der die Form eines liegenden Zylindermantelabschnitts hat und zum Befüllrotor hin ansteigt, und hat als Förderelement ein mittels eines Kraftantriebs entlang der Oberfläche des Bodens vor und zurück verschwenkbares Förderpendel, wobei eine horizontale Mittelachse des Bodens mit der Schwenkachse des Förderpendels zusammenfällt.

Als nachteilig wird bei dem bekannten Stand der Technik nach den beiden vorgenannten Dokumenten angesehen, dass die Pressgutzufördervorrichtungen technisch aufwändig sind und eine relativ große Zahl von Bauteilen aufweisen, was zu hohen Kosten für die Fertigung und zu einem hohen Gewicht der Pressgutzufördervorrichtungen führt.

Das Dokument DE 10 2017 108 631 A1, das eine Ballenpresse gemäß dem Oberbegriff des Anspruchs 1 offenbart, zeigt eine Einrichtung zum Sammeln von Pressgut und zum Zufördern des gesammelten Pressguts zu einer das Pressgut pressenden Presse, mit wenigstens einem verfahrbaren Sammelwagen, der einen Sammelraum für zu pressendes Pressgut aufweist, und mit einer Pressgutzufördervorrichtung, an welche der Sammelwagen andockbar ist. Der Sammelwagen weist einen Boden und eine unterseitigen Räderanordnung sowie wenigstens zwei einander gegenüberliegende Seitenwände auf. Das zu pressende Pressgut ist unter Anheben nach oben mittels der Pressgutzufördervorrichtung aus dem Sammelwagen entnehmbar und einem Pressraum oder Pressgutvorratsraum der Presse zuförderbar. Wesentlich ist hier, dass an oder in dem Sammelwagen ein bahnförmiges, flexibles oder gelenkiges Tragelement mit einem Bodenbereich und mit wenigstens zwei einander gegenüberliegenden Wandbereichen mit je einer oberen, freien Kante angeordnet ist, dass das Tragelement in einer Grundstellung U-förmig parallel zu wenigstens zwei einander gegenüberliegenden Seitenwänden und zu dem Boden des Sammelwagens verlaufend an diesen anliegt oder wenigstens zwei einander gegenüberliegende Seitenwände und den Boden des Sammelwagens bildet. Im an die Pressgutzufördervorrichtung angedockten Zustand des Sammelwagens ist zum Zweck des Anhebens des im Sammelwagen befindlichen, zu pressenden Pressguts das Tragelement von der freien Kante zumindest eines seiner Wandbereiche aus verkürzbar oder anhebbar. Zum Entnehmen des zu pressenden Pressguts aus dem Sammelwagen und zum Weiterfördern des zu pressenden Pressguts ist eine Anordnung aus mehreren, z. B. drei oder vier, oberhalb des an die Presse angedockten Sammelwagens angeordneten Zuführwalzen vorgesehen, mittels welchen das Pressgut erfasst und in Richtung zu einem Befüllrotor transportiert werden kann, der das Pressgut dann schließlich in die Presskammer der Presse befördert.

Als nachteilig bei diesem zuletzt genannten Stand der Technik wird insbesondere angesehen, dass diese Lösung speziell auf eine Ausführung mit einem oder mehreren verfahrbaren Sammelwagen gerichtet ist, wobei aber bei vielen Einsatzfällen von Ballenpressen solche Sammelwagen weder benötigt werden noch gewünscht sind.

Das Dokument CN 206 748 833 U zeigt eine vertikale Ballenpresse mit einer Presskammer, mit einer Beschickungsöffnung zum Einbringen von zu pressendem Pressgut in die Presskammer und mit einem in der Presskammer mit vertikaler Pressrichtung verfahrbaren Pressstempel. Außen an der Ballenpresse ist ein eine feste Form aufweisender Einfülltrichter angeordnet, dessen unteres Ende in die Einfüllöffnung mündet. An der Beschickungsöffnung ist eine Klappe angeordnet, die um ihre horizontale Unterkante zwischen einer Schließstellung und einer Öffnungsstellung verschwenkbar ist. In der Schließstellung bildet die Klappe mit ihrer Innenseite eine mit der inneren Begrenzung der Presskammer fluchtende Fläche und mit einem äußeren Klappenteil einen Verschluss des unteren Endes des Einfülltrichters. In ihrer nach außen verschwenkten Öffnungsstellung gibt die Klappe die Einfüllöffnung frei und die Innenseite der Klappe bildet dann einen unteren Endabschnitt der inneren Oberfläche des Einfülltrichters, sodass zu pressendes Pressgut aus dem Einfülltrichter durch Schwerkraftwirkung in die Presskammer rutschen kann.

Das Dokument CA 906 830 A zeigt eine Vorrichtung zum Erzeugen von Stapelfaserballen, mit einer Presskammer mit einer seitlichen Beschickungsöffnung zum Einbringen von zu pressenden Stapelfasern in die Presskammer und mit einem mit vertikaler Pressrichtung in der Presskammer verfahrbaren Pressstempel. Außen an der Vorrichtung ist vor der Einfüllöffnung ein Einfülltrichter angeordnet, dessen unteres Ende eine die zu pressenden Stapelfasern in die Presskammer leitende Rutschfläche bildet. Über der Unterkante der Beschickungsöffnung und unter dem Ende der Rutschfläche ist eine Leitung mit einer Reihe von in Richtung zum Inneren der Presskammer weisenden Öffnungen angeordnet, durch welche strahlförmige Fluidströme, vorzugsweise Luftströme, ausbringbar sind, mittels welchen eine gleichmäßige Verteilung der zu pressenden Stapelfasern in der Presskammer über deren Fläche bewirkt wird. Innerhalb des Einfülltrichters kann mittels an einem Trichtereinlass zugeführter Druckluft die Förderung der zu pressenden Stapelfasern unterstützt werden.

Das Dokument DE 12 17 872 B zeigt eine Vorrichtung zum Entleeren eines kastenförmigen Behälters eines Lastfahrzeugs mit an der Behälterstirnwand angeordneter Entleerungsöffnung, bei welcher der Boden und die der Entleerungsöffnung gegenüberliegende Stirnwand durch ein flexibles, nur an seinen beiden Enden befestigtes Band abgedeckt sind. Dabei kann das Band durch einen Querholm im Sinne einer Entleerung des Ladegutes bewegt werden, der in im Wesentlichen längs des oberen Behälterrandes waagerecht verlaufender Bahn von einem Antrieb in Richtung auf die Entleerungsöffnung zu verstellbar ist. Das Band ist an seinem oberen Ende mit der Behälterwandung fest verbunden und wird von dem mit Rollen, Walzen oder dgl. versehenen Querholm untergriffen. Die Enden des Querholms können jeweils an Schlitten angebracht sein, die an in Längsrichtung der Behälterseitenwände verlaufenden Führungsschienen verfahrbar geführt und von einem auf ihnen angeordneten Motor antreibbar sind. Alternativ können die Enden des Querholms jeweils an am Behälter längs seiner Seitenwände verschwenkbar gelagerten Schwenkarmen angebracht sein. Das Problem, mit dem sich dieses Dokument befasst, ist, dass bekannte Vorrichtungen dieser Art den Nachteil haben, dass beim Entleeren des Behälters dieser samt Last oder mindestens die Last angehoben werden muss und dass die so hervorgerufene Schwerpunktanhebung bei seitlich schrägstehendem Fahrzeug die Gefahr des Umkippens erhöht.

Das Dokument US 2009/202325 A1 zeigt eine Vorrichtung, umfassend einen offenen oberen Rahmen mit einem ersten Ende und einem gegenüberliegenden zweiten Ende und einer ersten Seite und einer gegenüberliegenden zweiten Seite und einen unteren Rahmen mit einem ersten Ende und einem gegenüberliegenden zweiten Ende. Das zweite Ende des unteren Rahmens ist schwenkbar mit dem zweiten Ende des oberen Rahmens verbunden. Weiter umfasst die Vorrichtung einen biegsamen Speicherkörper, der betriebsmäßig zwischen dem oberen Rahmen und dem unteren Rahmen verbunden ist, wobei der biegsame Speicherkörper zum Speichern von Material dient und aus einem biegsamen Material gebildet ist. Die Vorrichtung umfasst zudem eine Rollenanordnung, die am ersten Ende betriebsmäßig mit dem oberen Rahmen verbunden ist; wobei die Rollenanordnung dazu ausgelegt ist, den Speicherkörper straff zu ziehen, um das im Speicherkörper gespeicherte Material zu entladen, wenn der obere Rahmen vom unteren Rahmen weggeschwenkt wird. Zur Vorrichtung gehört weiterhin eine Ladeanordnung, die am ersten Ende betriebsmäßig mit dem unteren Rahmen verbunden ist und die konfiguriert ist, um Materialien durch eine Oberseite des offenen oberen Rahmens in den biegsamen Speicherkörper abzugeben, wobei in einer Lagerposition das erste Ende des oberen Rahmens neben dem ersten Ende des unteren Rahmens liegt und die Oberseite des offenen oberen Rahmens offen ist und wobei in einer Kippposition der obere Rahmen nach oben und vom ersten Ende des unteren Rahmens so weggeschwenkt ist, dass der biegsame Speicherkörper straff gezogen wird. Bevorzugt wird die Vorrichtung in Rasenpflegediensten zum Sammeln, Transportieren und Entladen von Grasschnitt verwendet, um ein zeitaufwändiges manuelle Entladen eines Anhängers mit Grasabfällen zu vermeiden. Zudem befasst sich dieses Dokument mit dem Problem, dass zerfallendes Schnittgut verklumpt und verklebt und an Behältern haften, was auch zu unerwünschter Geruchsentwicklung führt. Ein weiteres in diesem Dokument angesprochenes Problem besteht darin, dass Grasabfälle oder andere Arten von gehacktem Futtermaterial nicht gut fließen. Selbst wenn es aus einem Behälter abgeladen wird, ist manuelle Arbeit erforderlich, um das Material vollständiger aus dem Behälter zu entfernen. Um Grasabfälle zu entfernen, muss der Behälter, in dem sie transportiert werden, häufig gereinigt werden, z. B. durch Druckwäsche, was die Zeit und die Kosten für die Bereitstellung von Rasenpflegediensten weiter erhöht. Die Probleme können noch ausgeprägter werden, wenn Grasabfälle für längere Zeit im Behälter verbleiben, so dass vor dem Entleeren des Behälters ein erheblicher Zerfall auftreten kann.

Das Dokument US 2 573 584 A zeigt eine Vorrichtung zum Entladen von Schüttgut, wie Zuckerrohr oder Heu, aus einem Transportfahrzeug, wie Anhänger. Die Vorrichtung umfasst einen oben offenen Behälter mit nahe dessen oberem Rand an zwei ersten Seitenwänden angeordneten Seitenschienen. In jeder Seitenschiene ist ein gelenkiger, V-förmiger Rahmen mit seinem einen Ende verschiebbar geführt, derart, dass zwei Streben des jeweiligen Rahmens zwischen einer einander benachbarten Stellung und einer voneinander entfernten Stellung bewegbar sind. Zwischen den Spitzen der Rahmen ist eine diese verbindende Rolle angeordnet. Ein den Behälter ausfüllendes Netz ist mit dem oberen Rand von zwei zweiten Seitenwänden verbunden und die Rolle liegt an der Unterseite des Netzes derart an, dass die Rolle bei ihrer Bewegung das Netz anhebt und so eine darin enthaltene Ladung aus dem Transportfahrzeug entlädt. Die hier beschriebene Vorrichtung ist auf eine Verwendung an einem Transportfahrzeug, wie Lastkraftwagen oder Anhänger beschränkt.

Für die vorliegende Erfindung stellt sich daher die Aufgabe, eine Ballenpresse mit einer Pressgutzufördervorrichtung zu schaffen, welche die Nachteile des Standes der Technik vermeidet und welche insbesondere technisch einfacher sowie leichter und kostengünstiger ist und die für ihren Betrieb keine Sammelwagen benötigt.

Die Lösung der Aufgabe gelingt erfindungsgemäß mit einer Ballenpresse der eingangs genannten Art mit den kennzeichnenden Merkmalen des Patentanspruchs 1.

Mit der Erfindung wird eine einfache, leichte und kostengünstige Ballenpresse mit Pressgutzufördervorrichtung geschaffen, die nicht nur zum Aufnehmen und zum Zuführen von zu pressendem Pressgut zur Presskammer der zugeordneten Ballenpresse dient, sondern die zusätzlich auch noch die Funktion einer Abdeckung und eines Verschlusses der Beschickungsöffnung zur Presskammer der Ballenpresse hat, wenn ein Pressvorgang mit bewegtem Pressstempel in der Ballenpresse ausgeführt wird. Dabei wird vorteilhaft ein entsprechend positionierbarer Wandabschnitt des Tragelements als Abdeckung und Verschluss genutzt, es werden also dafür keine besonderen zusätzlichen Bauteile benötigt.

Bevorzugt ist weiter vorgesehen, dass die Schwenkachse der Hebearmanordnung horizontal sowie vertikal nach unten versetzt unterhalb der dem Pressgutübergabebereich der Pressgutzufördervorrichtung nächstliegenden Endkante des Tragelements verläuft, dass der Schwenkwinkel der Hebearmanordnung zwischen 80° und 110°, vorzugsweise 90° bis 100°, beträgt und dass die Hebearmanordnung in ihrer maximal angehobenen Schwenkstellung verriegelbar ist. Der relativ kleine Schwenkwinkel erfordert nur einen einfachen, unkomplizierten Schwenkantrieb. Mittels der Verriegelung in der maximal angehobenen Schwenkstellung, welche der Position zum Abdecken und Absperren der Beschickungsöffnung zur Presskammer entspricht, kann ein unbeabsichtigtes Entfernen des betreffenden Wandabschnitts des Tragelements aus der Abdeck- und Sperrstellung sicher vermieden werden. Unfallgefahren für Bedienungspersonal der Pressgutzufördervorrichtung und der Ballenpresse werden so minimiert.

Bevorzugt ist der Hebearmanordnung wenigstens ein Kraftantrieb, insbesondere wenigstens eine hydraulische oder pneumatische Kolben-Zylinder-Einheit, zugeordnet, was einen zuverlässigen Betrieb gewährleistet.

Insbesondere zur Entlastung des Tragelements während des Aufnehmens von zu pressendem Pressgut im Pressgutraum wird vorgeschlagen, dass außen von den durch die Seitenwandabschnitte des Tragelements gebildeten ersten Seitenwänden und dem durch den Bodenabschnitt gebildeten Boden des Pressgutraums zusätzlich feste erste Seitenwände und ein fester Boden angeordnet sind, an welche sich das Tragelement anlegen kann, solange es nicht zum Zweck des Entleerens des Pressgutraums angehoben wird.

Eine Weiterbildung der Pressgutzufördervorrichtung sieht vor, dass eine vordere, dem Pressgutübergabebereich abgewandte feste erste Seitenwand des Pressgutraums durch eine höhenvariable Zusatzwand nach oben hin verlängerbar ist. Auf diese Weise kann die Höhe der Eingabeschwelle für zu sammelndes Pressgut verändert und an einen bereits erreichten Füllstand angepasst werden, um einerseits ein bequemes manuelles Einlegen von Pressgut und andererseits die Aufnahme eines möglichst großen Volumens an zu pressendem Pressgut zu ermöglichen.

Zur Verstärkung und Beschleunigung des Befüllens der Presskammer der Ballenpresse kann an der Pressgutzufördervorrichtung in dem Pressgutübergabebereich ein zusätzliches Förderorgan angeordnet sein.

Bevorzugt ist dabei das zusätzliche Förderorgan ein Rotorförderer mit einer drehantreibbaren Förderwalze.

Damit die Förderwalze zum einen eine gute Förderwirkung erzielt und zum anderen aber Beschädigungen vermeidet, ist zweckmäßig die Förderwalze mit nach außen weisenden, flexiblen oder gelenkigen Förderzinken versehen.

Wenn mit der zuvor beschriebenen Verschwenkungsbewegung der Hebearmanordnung allein nicht eine für den Verschluss der Beschickungsöffnung nötige ideale Lage des betreffenden Seitenwandabschnitts des Tragelements erzielt wird, dann kann die Pressgutzufördervorrichtung eine Positioniermechanik aufweisen, welche bei in ihrer obersten Endstellung befindlicher Hebearmanordnung mit dieser und/oder mit der Heberolle in Eingriff bringbar ist und mittels welcher die Heberolle im Sinne einer Straffung des Tragelements in Richtung nach oben und/ oder zum Pressgutübergabebereich hin nach außen in eine Lage verstellbar ist, in welcher der betreffende Seitenwandabschnitt des Tragelements exakt vertikal dicht an der Beschickungsöffnung liegt und diese vollständig überdeckt und verschließt.

Um die zuvor beschriebene Positionierung mittels der Positioniermechanik technisch möglichst einfach zu ermöglichen, ist vorgesehen, dass der/jeder Hebearm der Hebearmanordnung einen längenveränderbaren, teleskopierbaren Endabschnitt aufweist.

Das Tragelement der Pressgutzufördervorrichtung besteht vorzugsweise aus einem Abschnitt eines textilverstärkten Kunststoff- oder Gummiförderbandes. Ein solches Material ist einerseits ausreichend flexibel und andererseits ausreichend haltbar und dabei kostengünstig am Markt verfügbar.

Die Pressgutzufördervorrichtung kann vorteilhaft als Nachrüstmodul gefertigt werden, um schon vorhandene, noch keine Pressgutzufördervorrichtung aufweisende Ballenpressen damit nachträglich auszustatten. Hierzu sind an der Pressgutzufördervorrichtung zweckmäßig Montageelemente zur Anbringung der Pressgutzufördervorrichtung an der Ballenpresse vorgesehen.

Alternativ ist es natürlich auch möglich, eine Ballenpresse bei ihrer Fertigung sofort mit der Pressgutzufördervorrichtung auszustatten.

Vorzugsweise ist die Pressgutzufördervorrichtung an der Presskammertür der Ballenpresse angeordnet und zusammen mit der Presskammertür relativ zur übrigen Ballenpresse um eine vertikale Achse verschwenkbar.

Um bei zum Zweck des Überführens von zu pressendem Pressgut in die Presskammer angehobenem Tragelement das Bedienungspersonal von einem Einbringen von weiterem Pressgut in die Pressgutzufördervorrichtung abzuhalten, ist zusätzlich ein durch eine flexible oder gelenkige Bahn gebildetes Abdeckelement vorgesehen, welches an seiner einen, ersten Endkante an einem äußeren Kopfende der Hebearmanordnung fixiert ist, welches in seinem Verlauf über eine Oberkante der vorderen, von dem Pressgutübergabebereich abgewandten höhenvariable Zusatzwand geführt ist und welches an seiner anderen, zweiten Endkante mit einer in Aufwickelrichtung vorbelasteten Aufwickelrolle, welche an der vom Pressgutübergabebereich entfernt liegenden festen ersten Seitenwand angeordnet ist, verbunden ist.

Damit für das Tragelement der Pressgutzufördervorrichtung eine möglichst lange, beschädigungsfreie Einsatzzeit erreicht wird, sieht die Erfindung weiter vor, dass im Pressgutübergabebereich eine von dessen Unterkante ausgehende, sich bogenförmig zum Pressgutraum hin und über einen Teil der Höhe des Pressgutraums nach unten erstreckende Tragelementanlegefläche angeordnet ist. Diese Tragelementanlegefläche kann beispielsweise eine passend gebogene Platte aus Blech oder Kunststoff sein, an welche sich der dem Pressgutübergabebereich nächstliegende Seitenwandabschnitt des Tragelements in dessen Grundstellung anlegt und auf diese Weise unterstützt wird.

Zusätzlich kann an der Ballenpresse ein durch eine flexible oder gelenkige Bahn gebildetes Trennelement vorgesehen sein, welches an seiner einen, ersten Endkante an einem vorderen, der Beschickungsöffnung der Ballenpresse zugewandten Rand des Pressstempels fixiert ist, welches von dort nach oben geführt ist und welches an seiner anderen, zweiten Endkante oberhalb der Beschickungsöffnung mit einer in Rückzugsrichtung vorbelasteten Aufwickelrolle oder Federanordnung verbunden ist. Mittels des Trennelements wird der oberhalb des Presstempels befindliche Raum abgesperrt und es wird verhindert, dass sich zu pressendes Pressgut in unerwünschter Weise oberhalb des Pressstempels ablegt.

Im Folgenden werden Ausführungsbeispiele der Erfindung anhand einer Zeichnung erläutert. Die Figuren der Zeichnung zeigen:
- Figur 1: eine vertikale Ballenpresse mit einer ersten Pressgutzufördervorrichtung, in einer ersten schräg seitlichen Vorderansicht,
- Figur 2: die Ballenpresse mit Pressgutzufördervorrichtung in gleicher Ansicht wie in Figur 1, nun mit teils weggelassenen, teils verstellten Seitenwänden der Pressgutzufördervorrichtung, in einer unteren Grundstellung eines Tragelements der Pressgutzufördervorrichtung,
- Figur 3: die Ballenpresse mit Pressgutzufördervorrichtung, nun mit einer geöffneten, die Pressgutzufördervorrichtung tragenden Presskammertür der Ballenpresse, in einer zweiten schräg seitlichen Vorderansicht,

- Figur 4: einen Teil der Ballenpresse mit Pressgutzufördervorrichtung in gleicher Ansicht wie in Figur 2, mit einer weggelassenen Seitenwand der Pressgutzufördervorrichtung, in einer oberen Endstellung des Tragelements der Pressgutzufördervorrichtung,
- Figur 5: das Tragelement und einzelne weitere Teile der Pressgutzufördervorrichtung und teilweise die Ballenpresse, in drei verschiedenen Stellungen des Tragelements, teils in Seitenansicht und teils im Vertikalschnitt,
- Figur 6: die Ballenpresse mit einer zweiten Pressgutzufördervorrichtung, mit einer weggelassenen Seitenwand der Pressgutzufördervorrichtung, mit der unteren Grundstellung und der oberen Endstellung des Tragelements der Pressgutzufördervorrichtung, teils in Seitenansicht und teils im Vertikalschnitt,
- Figur 7: einen vergrößerten Ausschnitt aus dem oberen Bereich von Ballenpresse und Pressgutzufördervorrichtung aus Figur 6, teils in Seitenansicht und teils im Vertikalschnitt,
- Figur 8: die Ballenpresse mit einer dritten Pressgutzufördervorrichtung, in einem vergrößerten Ausschnitt von deren oberem Bereich, in einem ersten Funktionszustand, teils in Seitenansicht und teils im Vertikalschnitt,
- Figur 9: die Ballenpresse mit Pressgutzufördervorrichtung in gleicher Darstellung wie in Figur 8, nun in einem zweiten Funktionszustand,
- Figur 10: die Ballenpresse mit einer vierten Pressgutzufördervorrichtung, in einem vergrößerten Ausschnitt von deren oberem Bereich, teils in Seitenansicht und teils im Vertikalschnitt, und
- Figur 11: die Ballenpresse mit einer fünften Pressgutzufördervorrichtung, in einem vergrößerten Ausschnitt von deren oberem Bereich, mit einer mittleren Zwischenstellung und der oberen Endstellung des Tragelements und eines zusätzlichen Abdeckelements der Pressgutzufördervorrichtung, teils in Seitenansicht und teils im Vertikalschnitt.

In der folgenden Figurenbeschreibung sind gleiche Teile in den verschiedenen Zeichnungsfiguren stets mit den gleichen Bezugszeichen versehen, sodass nicht zu jeder Zeichnungsfigur alle Bezugszeichen erneut erläutert werden müssen.

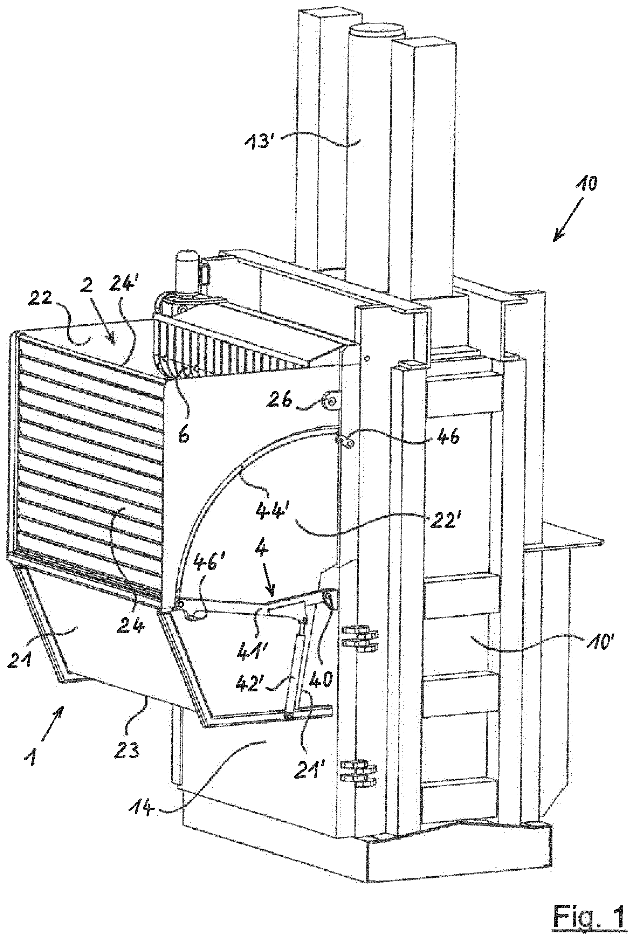

Figur 1 zeigt eine vertikale Ballenpresse 10 mit einer ersten Pressgutzufördervorrichtung 1 in einem mit der Ballenpresse 10, hier mit deren Presskammertür 14, verbundenen Zustand der Pressgutzufördervorrichtung 1, in einer ersten schräg seitlichen Vorderansicht.

Die Pressgutzufördervorrichtung 1 weist einen Pressgutraum 2, in welchen zu pressendes Pressgut eingebbar ist, und Fördermittel, mittels welchen das Pressgut aus dem Pressgutraum 2 heraus abförderbar und einer Beschickungsöffnung der Ballenpresse 10 zuförderbar ist, auf.

Der Pressgutraum 2 ist oben offen sowie seitlich durch feste erste Seitenwände 21, 21' und feste zweite Seitenwände 22, 22' und unten durch einen festen Boden 23 begrenzt. Nach vorne, d. h. in Figur 1 nach links hin, d. h. zur üblicherweise benutzten Pressguteingabeseite hin, ist der Pressgutraum 2 durch eine höhenvariable Zusatzwand 24, wie z. B. einen aufrollbaren oder zusammenfaltbaren Vorhang, begrenzt, die sich von der Oberkante der hier niedrigen festen ersten Seitenwand 21 nach oben erstreckt. Im dargestellten Beispiel ist diese Zusatzwand 24 in einer Position dargestellt, in der sich ihre eine Einfüllschwelle bildende Oberkante 24' in ihrer höchstmöglichen Position befindet. Diese Einfüllschwelle kann durch Verkürzen der Zusatzwand 24 nach unten hin auf eine das Einfüllen erleichternde niedrigere, ergonomisch günstige Position herabgelassen werden.

Sichtbar ist in Figur 1 auch ein Teil einer Hebearmanordnung 4, die symmetrisch beiderseits der zweiten festen Seitenwände 22, 22' unmittelbar außen von diesen angeordnet ist. Außen an der dem Betrachter zugewandten Seitenwand 22' verläuft der eine Hebearm 41' der Hebearmanordnung 4, während der zweite Hebearm 41 außen von der anderen zweiten festen Seitenwand 22 hier verdeckt ist. Beide Hebearme 41, 41' sind um eine gemeinsame Schwenkachse 40 mittels eines Kraftantriebs 42, 42', wie hydraulische Kolben-ZylinderEinheiten, verschwenkbar. In den Seitenwänden 22, 22' ist jeweils eine bogenförmig über etwa 90° verlaufende Hebearmführung 44, 44' vorgesehen, wovon in Figur 1 nur die Führung 44' sichtbar ist.

Mittels der Riegelelemente 46, 46', hier in Form eines Fallhakens und eines Bolzens, können die Hebearme 41, 41' in ihrer maximal nach oben verschwenkten Position lösbar verriegelt werden.

Mit den freien, von der Schwenkachse 40 entfernten Enden der Hebearme 41, 41' der Hebearmanordnung 4 ist eine im Inneren des Pressgutraums 2 verlaufende, hier verdeckte und so nicht sichtbare, Heberolle 43 verbunden. Die Heberolle 43 dient, wie anhand der weiteren Figuren noch näher erläutert wird, zum Anheben eines flexiblen Tragelements 3, das in Figur 1 vollständig im Pressgutraum 2 liegt.

Im oberen Bereich der Pressgutzufördervorrichtung 1 ist an deren der Ballenpresse 10 zugewandter Seite als zusätzliches Förderorgan 6 eine an sich bekannte, drehantreibbare Förderwalze angeordnet.

Die Ballenpresse 10 ohne die Pressgutzufördervorrichtung 1 ist von an sich bekannter Bauart und besitzt ein stabiles Pressengehäuse 10 mit einer Presskammer darin, in welcher ein Pressstempel mittels eines Kraftantriebs 13', wie hydraulische Kolben-Zylinder-Einheit, auf und ab verfahrbar ist

Zur einfachen und schnellen mechanischen Verbindung der Pressgutzufördervorrichtung 1 mit der Presskammertür 14 der Ballenpresse 10 dienen Montageelemente 26.

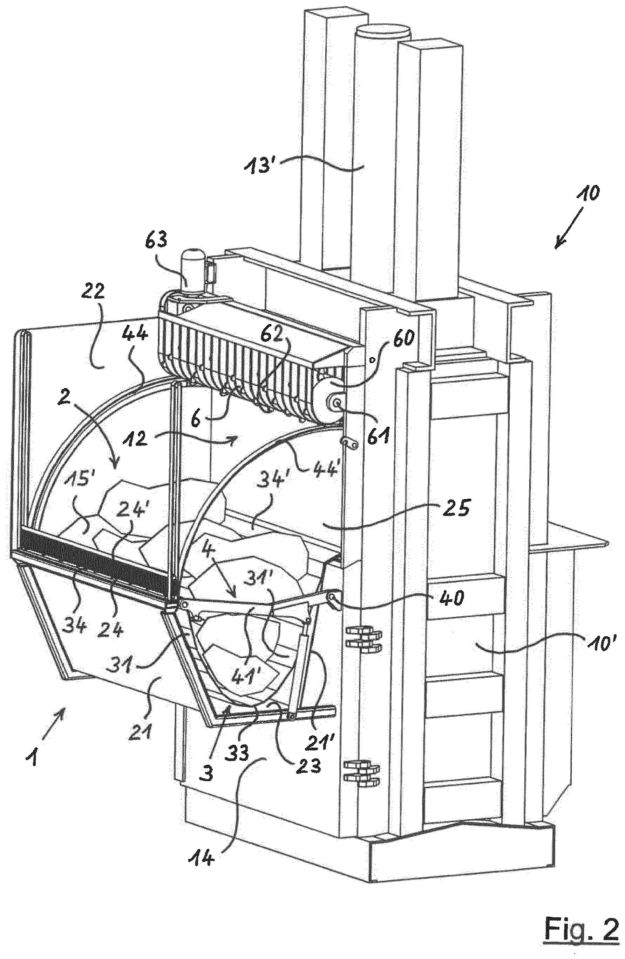

Figur 2 zeigt die Ballenpresse 10 mit Pressgutzufördervorrichtung 1 in gleicher Ansicht wie in Figur 1, nun mit weggelassener fester zweiter Seitenwand 22' und mit abgesenkter Zusatzwand 24, in einer unteren Grundstellung eines Tragelements 3 der Pressgutzufördervorrichtung 1.

Der Pressgutraum 2 ist hier durch das bahnförmige, in seiner in Figur 2 dargestellten Grundstellung U-förmig verlaufende, flexible oder gelenkige Tragelement 3 mit wenigstens zwei einander gegenüberliegenden Seitenwandabschnitten 31, 31' und einem Bodenabschnitt 33 sowie durch die zwei einander gegenüberliegenden festen zweiten Seitenwände 22, 22' begrenzt. In den Pressgutraum 2 ist zu pressendes, loses Pressgut 15', wie z. B. Kartonagen, Pappen, Altpapier oder leere Kunststoffflaschen, eingebracht, insbesondere durch Bedienungspersonal über die Oberkante 24' der Zusatzwand 24 hinweg manuell eingelegt.

Das Tragelement 3 ist an seiner einen Endkante 34 an der Oberkante der niedrigen ersten festen Seitenwand 21 und an seiner anderen Endkante 34' an der Unterkante eines zu einer Beschickungsöffnung 12 der Ballenpresse 10 hin offenen Pressgutübergabebereichs 25 der Pressgutzufördervorrichtung 1 fixiert.

Hinten, an der dortigen festen zweiten Seitenwand 22 und vorne in Figur 2 sind die Hebearmführungen 44, 44' sichtbar.

Oben an der Pressgutzufördervorrichtung 1 liegt das zusätzliche Förderorgan 6 mit der mit Förderzinken 62 besetzten Förderwalze 60, die mittels eines Getriebemotors 63 in Drehung versetzbar ist.

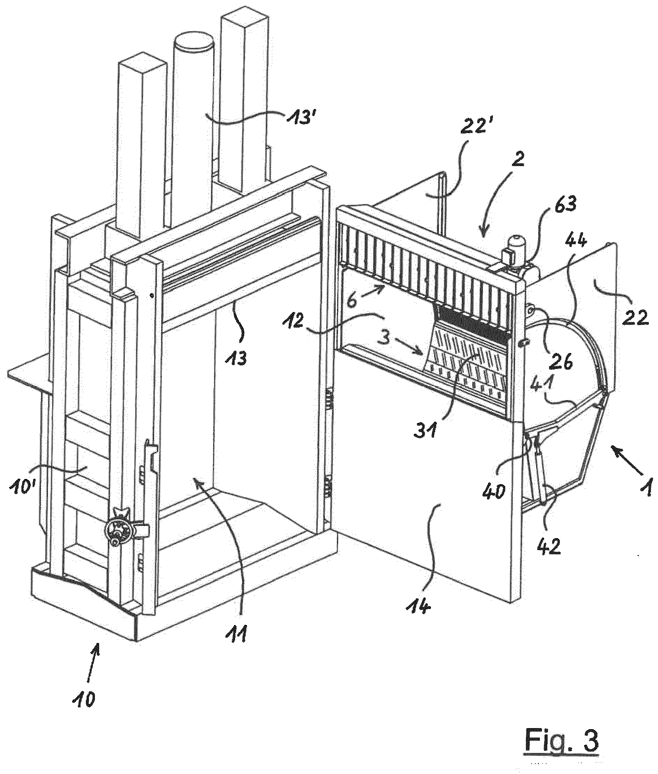

Figur 3 zeigt die Ballenpresse 10 mit Pressgutzufördervorrichtung 1, nun mit geöffneter, die Pressgutzufördervorrichtung 1 tragender Presskammertür 14 der Ballenpresse 10, in einer zweiten schräg seitlichen Vorderansicht.

Im Inneren des Pressengehäuses 10' liegt die nun offene Presskammer 11. Oben in der Presskammer 11 ist der sich hier in seiner obersten Stellung befindliche Pressstempel 13 zu sehen. Oberseitig auf dem Pressengehäuse 10' ist der Kraftantrieb 13' für den Pressstempel sichtbar. Die offene Stellung der Presskammertür 14 dient insbesondere zum Entnehmen eines fertigen Pressballens aus der Presskammer 11.

An der hier vom Betrachter abgewandten Seite der Presskammertür 14 ist die Pressgutzufördervorrichtung 1 angeordnet und durch die Presskammertür 14 teilweise verdeckt. Sichtbar sind hier die eine feste zweite Seitenwand 22' und die andere feste zweite Seitenwand 22 mit dem dortigen Hebearm 41 und dem zugehörigen Kraftantrieb 42 sowie der Hebearmführung 44.

Oben in Figur 3 ist durch die Beschickungsöffnung 12 in der Presskammertür 14 hindurch das zusätzliche Förderorgans 6 mit seinem Getriebemotor 63 zu sehen. Darunter ist der eine Seitenwandabschnitt 31 des in seiner Grundstellung befindlichen Tragelements 3 teilweise sichtbar.

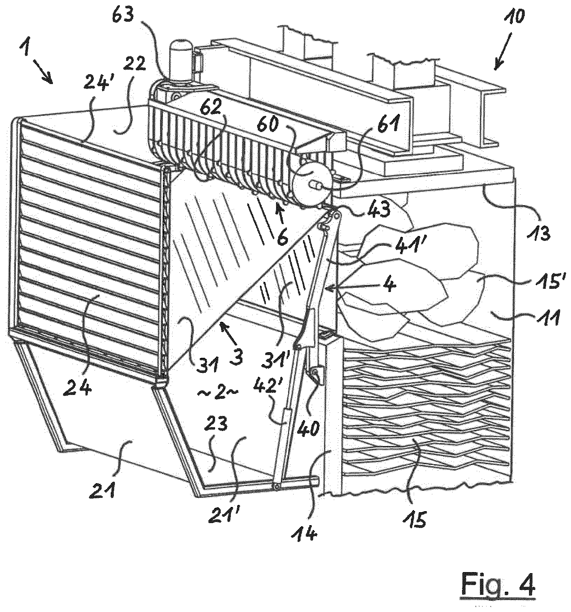

Figur 4 zeigt teilweise die Ballenpresse 10 sowie die Pressgutzufördervorrichtung 1 in gleicher Ansicht wie in Figur 2, mit weggelassener zweiter Seitenwand 22' der Pressgutzufördervorrichtung 1, in einer oberen Endstellung des Tragelements 3 der Pressgutzufördervorrichtung 1.

Das Tragelement 3 ist hier nun, von der Grundstellung gemäß Figur 2 ausgehend, zum Zweck des Zuförderns des im Pressgutraum 2 befindlichen, zu pressenden Pressguts 15' zur Ballenpresse 10 mittels der Hebearmanordnung 4 und der von dieser getragenen Heberolle 43 in die in Figur 4 gezeigte obere Endstellung angehoben. Durch dieses Anheben wird das zu pressende Pressgut 15' nach und nach über den Pressgutübergabebereich 25 und durch die Beschickungsöffnung 12 hindurch in die Presskammer 11 der Ballenpresse 10 befördert. Mittels des zusätzlichen Förderorgans 6 wird das Überführen des zu pressenden Pressguts 15' in die Presskammer 11 unterstützt und beschleunigt.

In der abschließend erreichten oberen Endstellung des Tragelements 3 gemäß Figur 4 ist das Tragelement 3 straff gespannt und verdeckt und verschließt mit seinem Seitenwandabschnitt 31' nun den Pressgutübergabebereich 25 der Pressgutzufördervorrichtung 1 und zugleich auch die Beschickungsöffnung 12 der Ballenpresse 10.

In der Presskammer 11 ist in deren unterem Teil bereits verdichtetes, gepresstes Pressgut 15 sichtbar, auf welchem nun frisch zugefördertes, noch zu verpressendes weiteres Pressgut 15' liegt. In der in Figur 4 gezeigten oberen Endstellung des Trag-elements 3 ist die Presse für einen weiteren Presshub des Pressstempels 13 bereit.

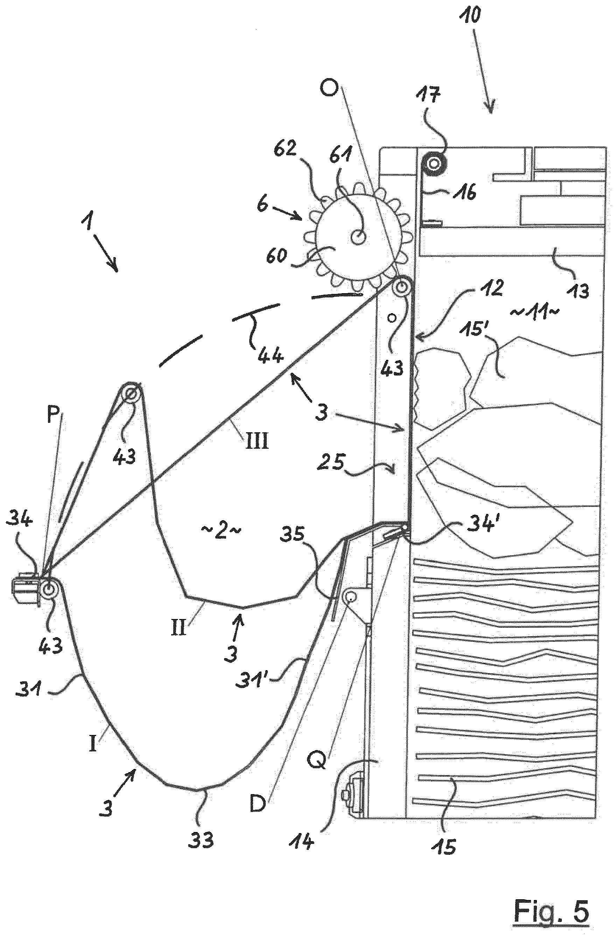

Figur 5 zeigt teilweise die Ballenpresse 10 sowie, reduziert auf das Tragelement 3 und einzelne weitere Teile, die Pressgutzufördervorrichtung 1 in drei verschiedenen Stellungen des Tragelements 3, teils in Seitenansicht und teils im Vertikalschnitt.

In seiner unteren Grundstellung I befindet sich das flexible Tragelement 3 in der Position, in der es den Pressgutraum 2 an zwei Seiten und nach unten sackartig begrenzt. In dieser Grundstellung I kann Pressgut, das später verpresst werden soll, in den Pressgutraum 2 eingefüllt werden.

Die Heberolle 43 der Hebearmanordnung 4 befindet sich hier am Punkt P, an welchem die dortige Endkante 34 des Tragelements 3 fixiert ist. Die andere Endkante 34' des Tragelements 3 ist am unteren Rand des Pressgutübergabebereichs 25 im Punkt Q fixiert.

In der mittleren Zwischenstellung II ist das flexible Tragelement 3 mittels der Hebearmanordnung 4 und der Heberolle 43 über eine gewisse Strecke angehoben, wobei das sich im Pressgutraum 2 befindende zu pressende Pressgut 15' in Richtung zur Presskammer 11 der Ballenpresse 10 befördert wird. Im oberen Bereich des Pressgutraums 2 wird diese Förderung unterstützt durch das vor der Beschickungsöffnung 12 zur Presskammer 11 angeordnete zusätzliche Förderorgan 6.

In der oberen Endstellung III befindet sich die Heberolle 43 am Punkt O. In diesem Punkt O ist das von der Heberolle 43 gestützte flexible Tragelement 3, das an den Punkten P und Q fest eingespannt ist, straff gezogen.

In dieser oberen Endstellung III ist die zur Presskammer 11 hin liegende Fläche des Tragelements 3 eben und erstreckt sich parallel zur Bewegungsrichtung des Pressstempels 13 in einer im Wesentlichen vertikalen Ebene und in einem während der Bewegung des Pressstempels 13 aus seiner oberen in seine untere Position gleichbleibenden Abstand zu der der Pressgutzuführvorrichtung 1 zugewandten Vorderkante des Pressstempels 13.

Das Verschwenken der hier nicht eingezeichneten Hebearme 41, 41' der Hebearmanordnung 4 erfolgt dabei um den Punkt D, welcher der Lage der Schwenkachse 40 entspricht. Die Heberolle 43 bewegt sich dabei entlang der in Figur 5 durch eine gestrichelte Linie angedeuteten Kurve, welche dem Verlauf der Hebearmführungen 44, 44' entspricht.

Weiter zeigt die Figur 5 ein der Ballenpresse 10 in deren oberem Bereich zugeordnetes Trennelement 16. Das Trennelement 16 ist hier durch eine flexible oder gelenkige Bahn gebildet, welche an ihrer einen, ersten Endkante an dem vorderen, der Beschickungsöffnung 12 der Ballenpresse 10 zugewandten Rand des Pressstempels 13 fixiert ist, welche von dort nach oben geführt ist und welche an ihrer oberen, zweiten Endkante oberhalb der Beschickungsöffnung 12 mit einer in Rückzugsrichtung vorbelasteten, lagefesten Aufwickelrolle 17 verbunden ist. Bei einem Absenken des Pressstempels 13 zieht dieser das Trennelement 16 mit sich nach unten und verschließt somit die Beschickungsöffnung 12 der Presskammer 11, wenn sich der Pressstempel 13 nach unten bewegt und sich in einer abgesenkten Stellung befindet.

Vom unteren Rand des Pressgutübergabebereichs 25 geht eine sich bogenförmig zum Pressgutraum 2 hin und über einen Teil der Höhe des Pressgutraums 2 nach unten erstreckende Tragelementanlegefläche 35 aus, an welche sich das Tragelement 3 in seiner Grundstellung und in Zwischenstellungen anlegen kann.

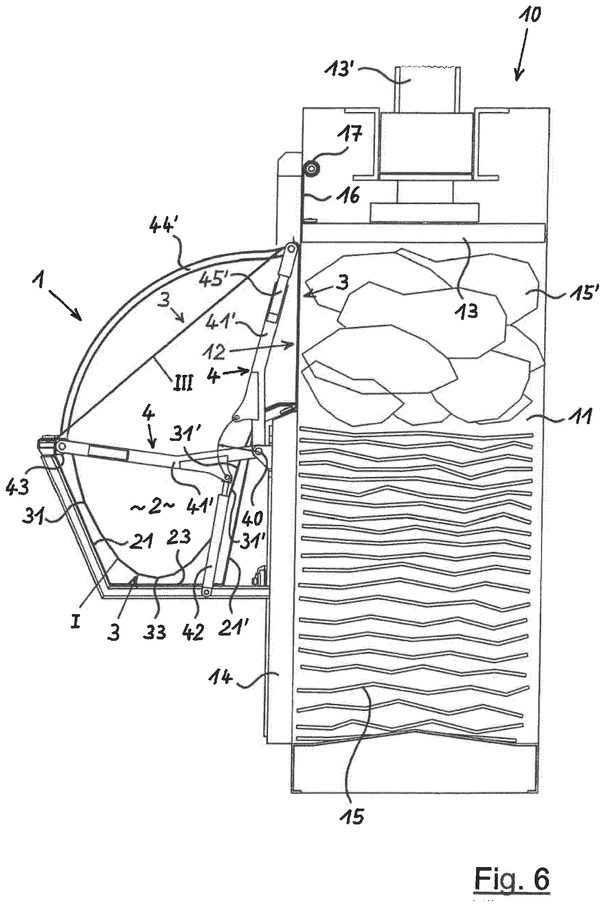

Figur 6 zeigt die Ballenpresse 10 mit einer zweiten Pressgutzufördervorrichtung 1, mit weggelassenen zweiten Seitenwänden 22, 22' der Pressgutzufördervorrichtung 1, mit der unteren Grundstellung I und der oberen Endstellung III des Tragelements 3 der Pressgutzufördervorrichtung 1, teils in Seitenansicht und teils im Vertikalschnitt.

Unterschiedlich zu dem zuvor beschriebenen ersten Ausführungsbeispiel ist hier, dass die Pressgutzufördervorrichtung 1 nach Figur 6 kein zusätzliches Förderorgan aufweist. Das Zuführen des zu pressenden Pressguts 15' aus dem Pressgutraum 2 der Pressgutzufördervorrichtung 1 in die Presskammer 11 der Ballenpresse 10 erfolgt hier also allein durch das Anheben des flexiblen Tragelements 3.

In der Grundstellung I bildet das Tragelement 3 mit seinen Seitenwandabschnitten 31, 31' und seinem Bodenabschnitt 33 zwei seitliche Begrenzungen und die untere Begrenzung des Pressgutraums 2. Zwei weitere seitliche Begrenzungen des Pressgutraums 2 werden durch die hier nicht dargestellten zweiten festen Seitenwände 22, 22' gebildet.

Durch das Verschwenken der Hebearmanordnung 4 im Uhrzeigersinn um etwa 90° nach oben wird das Tragelement 3 in seine obere Endstellung III gebracht, in welcher es straff gespannt ist und einerseits die Beschickungsöffnung 12 zur Presskammer 11 der Ballenpresse 10 verschließt und andererseits mit seinem nach außen, von der Ballenpresse 10 weg weisenden Bereich ein Einlegen von zu pressendem Pressgut verhindert.

Durch wiederholtes Einbringen von zu pressendem Pressgut 15' in die Presskammer 11 und entsprechend wiederholtes Verfahren des Pressstempels 13 nach unten wird nach und nach in der Presskammer 11 ein Pressballen aus verpresstem Pressgut 15 gebildet. In seinem fertig gepressten Zustand kann der Pressballen aus gepresstem Pressgut 15 nach Öffnen der Presskammertür 14 aus der Presskammer 11 entnommen werden, wobei zweckmäßig zuvor noch ein an sich bekanntes Abbinden des Pressballens in der Presskammer 11 erfolgen kann.

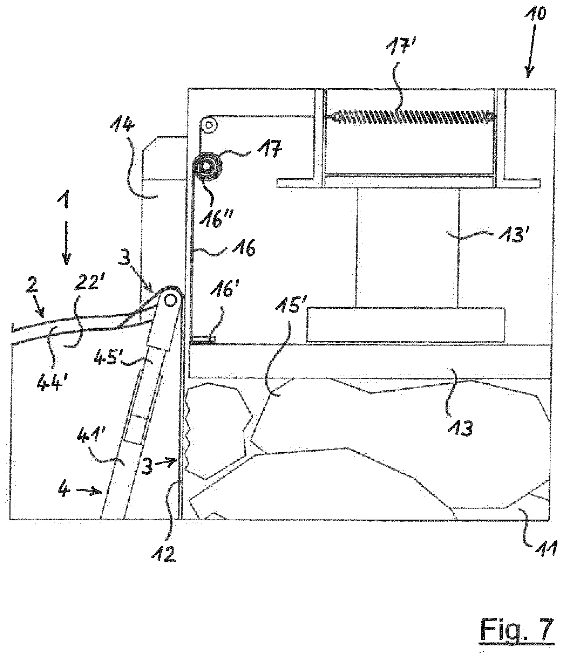

Figur 7 zeigt einen vergrößerten Ausschnitt aus dem oberen Bereich von Ballenpresse 10 und Pressgutzufördervorrichtung 1 aus Figur 6, teils in Seitenansicht und teils im Vertikalschnitt.

Der Pressstempel 13 befindet sich hier in seiner Bewegung von seiner oberen Endstellung, die einer Befüllposition entspricht, in Richtung auf seine untere Endposition, die entsprechend dem bereits erreichten Füllstand der Presskammer 11 in unterschiedlichen Höhen liegen kann.

Links oberhalb des Pressstempels 13 ist das aufrollbare Trennelement 16, beispielsweise ein flexibles Tuch, zu erkennen, das mit seiner unteren Endkante 16' oberseitig am vorderen, das heißt in Figur 7 linken, Rand des Pressstempels 13 angebracht ist. Die zweite Endkante 16" des Trennelements 16 ist mit der Aufwickelrolle 17 verbunden, die lagefest oberhalb der Beschickungsöffnung 12 an dem Gehäuse 10' der Ballenpresse 10 angeordnet ist.

Beim Absenken des Pressstempels 13 mittels seines Kraftantriebs 13' wird das Trennelement 16 entsprechend abgerollt. Durch die Abrollbewegung wird eine Feder 17' gespannt, die bei Aufwärtsbewegung des Pressstempels 13 dafür sorgt, dass die Aufwickelrolle 17, mit der die zweite Endkante 16" des Trennelements 16 verbunden ist, in Aufwickelbewegung versetzt wird und das Trennelement 16 wieder aufrollt.

Sollte zu pressendes Pressgut 15' vom Pressstempel 13 bei seiner Abwärtsbewegung nicht erfasst werden, dann bleibt dieses Pressgut 15' zwischen dem Trennelement 16 und dem die Beschickungsöffnung 12 überdeckenden Abschnitt des Tragelements 3 hängen und kann nicht in unerwünschter Weise in den oberhalb des Pressstempels 13 sich bildenden Raum gelangen, wo Pressgut zu Störungen der Ballenpresse 10 führen könnte.

In Figur 7 ist auch dargestellt, dass die Heberolle 43 in ihre Endposition über die nach oben hin zeigende Führung 44' nach oben geführt wird, damit das Tragelement 3 straff gezogen wird.

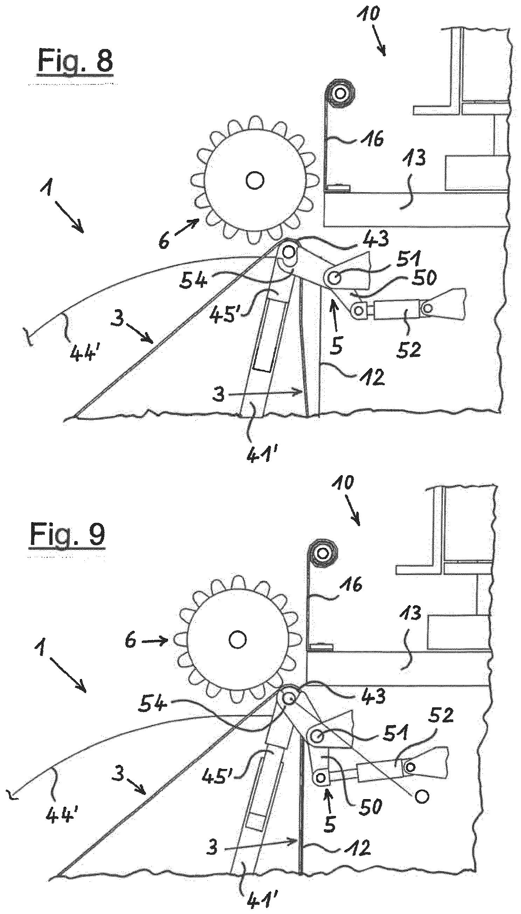

Figur 8 zeigt die Ballenpresse 10 mit einer dritten Pressgutzufördervorrichtung 1, in einem vergrößerten Ausschnitt von deren oberem Bereich, in einem ersten Funktionszustand, teils in Seitenansicht und teils im Vertikalschnitt. Diese dritte Pressgutzufördervorrichtung 1 ist wieder mit einem zusätzlichen Förderorgan 6 der zuvor schon beschriebenen Art ausgestattet.

Weiterhin besitzt die Pressgutzufördervorrichtung 1 eine Positioniermechanik 5, die dazu dient, die Hebelrolle 43 in der oberen Endstellung relativ zur Beschickungsöffnung 12 exakt so zu positionieren, dass der dortige Abschnitt des Tragelements 3 die Beschickungsöffnung 12 möglichst dicht überdeckt und verschließt. Dazu besitzt die Positioniermechanik 5 einen Hebelarm 50, der um eine der Ballenpresse 10 zugeordnete, horizontal und senkrecht zur Zeichnungsebene der Figur 8 verlaufende Schwenkachse 51 verschwenkbar ist. An dem einen, unteren Ende des Hebelarms 50 greift ein Kraftantrieb 52, hier in Form einer pneumatischen oder hydraulischen Kolben-Zylinder-Einheit, an. Am anderen Ende des Hebelarms 50 ist eine nach oben hin offene Eingriffsgabel 54 angeformt.

Die Hebearme 41, 41' der Hebearmanordnung 4 besitzen hier teleskopierbare Endabschnitte 45, 45', an deren äußerem Ende die Heberolle 43 mittels Lagerzapfen, welche axial nach außen jeweils über die Endabschnitte 45, 45' hinausragen, drehbar gelagert ist. Die Hebearmführung 44' für den in Figur 8 sichtbaren Hebearm 41' ist hier durch eine einfache, bogenförmig verlaufende Linie angedeutet.

In dem Zustand, der in Figur 8 gezeigt ist, befindet sich die Eingriffsgabel 54 außer Eingriff mit dem Endabschnitt 45' des Hebearmes 41'. Die Heberolle 43 liegt noch in einem gewissen horizontalen Abstand von der Ebene der Beschickungsöffnung 12 und der nahe der Beschickungsöffnung 12 verlaufender Abschnitt des Tragelements 3 hat dementsprechend noch einen gewissen Abstand von der Ebene der Beschickungsöffnung 12.

Figur 9 zeigt die Ballenpresse 10 mit Pressgutzufördervorrichtung 1 in gleicher Darstellung wie in Figur 8, nun in einem zweiten Funktionszustand. In diesem zweiten Funktionszustand ist durch Betätigen des Kraftantriebs 52 der Hebelarm 50 im Uhrzeigersinn verschwenkt und dadurch ist die Eingriffsgabel 54 mit dem Endabschnitt 45' und dem dortigen Lagerzapfen der Heberolle 43 in Eingriff getreten. Symmetrisch dazu ist der gleiche Vorgang auf der anderen Seite des Pressgutraums abgelaufen. Hierdurch ist die Heberolle 43 in die in Figur 9 sichtbaren Position gebracht, in welcher nun der von der Heberolle 43 vertikal nach unten verlaufende Abschnitt des Tragelements 3 die Beschickungsöffnung 12 der Ballenpresse 10 dicht abdeckt und verschließt.

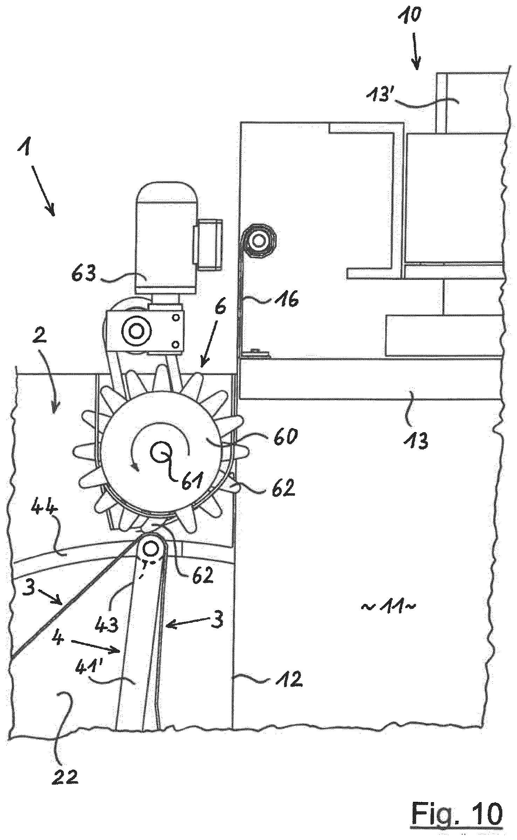

Figur 10 zeigt die Ballenpresse 10 mit einer vierten Pressgutzufördervorrichtung 1, in einem vergrößerten Ausschnitt von deren oberem Bereich, teils in Seitenansicht und teils im Vertikalschnitt.

Diese Pressgutzufördervorrichtung 1 besitzt wieder ein zusätzliches Förderorgan 6 in Form einer von einem Getriebemotor 63 angetriebene Förderwalze 60, die durch ihre Rotation das durch die Hebearmanordnung 4 im Tragelement 3 angehobene zu pressende Pressgut in die unterhalb des Pressstempels 13 befindliche Presskammer 11 der Ballenpresse 10 befördert.

Die Förderwalze 60 ist dabei, anders als bei den zuvor beschriebenen Ausführungsbeispielen von Pressgutzufördervorrichtungen 1 mit zusätzlichem Förderorgan 6, mit flexiblen, zum Beispiel aus Kunststoff, wie Polyurethan (PUR), bestehenden Förderzinken 62 ausgerüstet. Diese flexiblen Förderzinken 62 können daher im Bewegungsbereich der anderen Arbeitswerkzeuge der Ballenpresse 10 und/oder deren Pressgutzufördervorrichtung 1 liegen und diesen ohne Beschädigungen ausweichen.

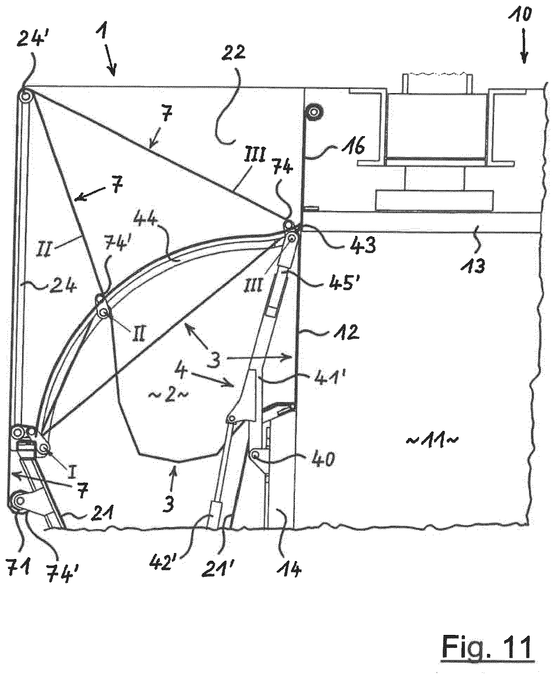

Figur 11 schließlich zeigt die Ballenpresse 10 mit einer fünften Pressgutzufördervorrichtung 1, in einem vergrößerten Ausschnitt von deren oberem Bereich, mit der mittleren Zwischenstellung II und der oberen Endstellung III des Tragelements 3 und eines zusätzlichen Abdeckelements 7 der Pressgutzufördervorrichtung 1, teils in Seitenansicht und teils im Vertikalschnitt.

Bei dieser Ausführung der Pressgutzufördervorrichtung 1 ist das zusätzliche Ab-deckelement 7, zum Beispiel in Form eines flexiblen Tuchs, vorgesehen, welches verhindert, dass bei der Bewegung der Heberolle 43 und der davon bewirkten Anhebung und Straffung des flexiblen Tragelements 3 zu pressendes Pressgut aus dem Pressgutraum 2 in den Raum hineinfällt, der sich hierbei zwischen der vorderen, in Figur 11 linken Begrenzung des Pressgutraums 2 und dem angehobenen, in seiner oberen Endstellung befindlichen Tragelement 3 bildet.

Dazu ist das Abdeckelement 7 an seiner einen, ersten Endkante 74 an einem äußeren Kopfende der Hebearmanordnung 4 fixiert, in seinem weiteren Verlauf über die Oberkante 24' der vorderen, von dem Pressgutübergabebereich 25 abgewandten höhenvariablen Zusatzwand 24 geführt und an seiner anderen, zweiten Endkante 74' mit einer in Aufwickelrichtung vorbelasteten Aufwickelrolle 71, welche an der vom Pressgutübergabebereich 25 entfernt liegenden festen ersten Seitenwand (21) angeordnet ist, verbunden.

Beim Anheben der Hebearmanordnung 4 wird das Abdeckelement 7 von deren Bewegung wie das Tragelement 3 ebenfalls straff gezogen und nimmt dann die in Figur 11 als Stellung III dargestellte Lage ein, in der es den Pressgutraum 2 verdeckt.

Beim Befüllen des Pressgutraums 2 mit zu pressendem Pressgut hängt das flexible Abdeckelement 7 lose an der der Ballenpresse 10 zugewandten Seite der ersten festen Seitenwand 21 des Pressgutraums 2 herunter und tritt dort nicht störend in Erscheinung.

### Bezugszeichenliste

- Zeichen: Bezeichnung

- 1: Pressgutzufördervorrichtung
- 10: Ballenpresse
- 10': Pressengehäuse
- 11: Presskammer
- 12: Beschickungsöffnung
- 13: Pressstempel
- 13': Kraftantrieb für 13
- 14: Presskammertür
- 15: gepresstes Pressgut
- 15': loses Pressgut
- 16: Trennelement
- 16', 16": Endkanten von 16
- 17: Aufwickelrolle für 16
- 17': Vorbelastungsfeder für 17

- 2: Pressgutraum
- 21, 21': erste feste Seitenwände
- 22, 22': zweite feste Seitenwände
- 23: fester Boden
- 24: höhenvariable Zusatzwand über 21
- 24': Oberkante von 24
- 25: Pressgutübergabebereich
- 26: Montageelemente

- 3: Tragelement
- 31, 31': Seitenwandabschnitte von 3
- 33: Bodenabschnitt von 3
- 34, 34': Endkanten von 3
- 35: Tragelementanlegefläche
- 4: Hebearmanordnung
- 40: Schwenkachse
- 41, 41': Hebearme
- 42, 42': Kraftantriebe für 41, 41'
- 43: Heberolle
- 44, 44': Hebearmführungen an 22, 22'
- 45, 45': teleskopierbare Endabschnitte von 41, 41'
- 46, 46': Riegelelemente

- 5: Positioniermechanik
- 50: Hebelarm
- 51: Schwenkachse von 50
- 52: Kraftantrieb an 5
- 54: Eingriffsgabel an 50

- 6: zusätzliches Förderorgan
- 60: Förderwalze
- 61: Drehachse von 60
- 62: Förderzinken
- 63: Getriebemotor

- 7: Abdeckelement
- 71: Aufwickelrolle für 7
- 74, 74': Endkanten von 7

- I: untere Grundstellung von 3
- II: mittlere Zwischenstellung von 3
- III: obere Endstellung von 3

- D: Anlenkpunkt für 41, 41'
- O: obere Endstellung von 43
- P: Fixpunkt von 34
- Q: Fixpunkt von 34'

## Patentansprüche

1. Ballenpresse (10) mit einer Presskammer (11), mit einer Beschickungsöffnung (12) zum Einbringen von zu pressendem Pressgut (15') in die Presskammer (11), mit einem in der Presskammer (11) mit vertikaler Pressrichtung verfahrbaren Pressstempel (13), mit einer Presskammertür (14) zum Entnehmen eines fertig gepressten Pressballens aus der Presskammer (11) und mit einer Pressgutzufördervorrichtung (1), wobei die Pressgutzufördervorrichtung (1) einen Pressgutraum (2), in welchen zu pressendes Pressgut (15') eingebbar ist, und Fördermittel, mittels welchen das Pressgut (15') aus dem Pressgutraum (2) heraus abförderbar und der Beschickungsöffnung (12) der Ballenpresse (10) zuförderbar ist, aufweist,
wobei der Pressgutraum (2) durch ein bahnförmiges, in einer Grundstellung U-förmig verlaufendes, flexibles oder gelenkiges Tragelement (3) mit wenigstens zwei einander gegenüberliegenden ersten Seitenwandabschnitten (31, 31') und einem Bodenabschnitt (33) sowie durch wenigstens zwei einander gegenüberliegende feste zweite Seitenwände (22, 22') begrenzt ist, dass zum Zweck des Zuförderns des im Pressgutraum (2) befindlichen, zu pressenden Pressguts (15') zur Ballenpresse (10) mittels einer Hebeeinrichtung das Tragelement (3) anhebbar ist,
**dadurch gekennzeichnet,**
**dass** das Tragelement (3) an zwei einander gegenüberliegenden, horizontalen Endkanten (34, 34') fixiert ist und als Hebeeinrichtung an der Unterseite des Tragelements (3) eine sich über die Breite des Tragelements (3) erstreckende Heberolle (43) anliegt, die mittels einer Hebearmanordnung (4) der Pressgutzufördervorrichtung (1) um eine parallel zu den Endkanten (34, 34') des Tragelements (3) unterhalb der Endkanten (34, 34') verlaufende Schwenkachse (40) verschwenkbar ist und mittels welcher das Tragelement (3) von der Endkante (34, 34') eines seiner Seitenwandabschnitte (31, 31') ausgehend anhebbar ist und
**dass** in einer maximal angehobenen Endposition des Tragelements (3) dieses gespannt ist und ein Pressgutübergabebereich (25) der Pressgutzufördervorrichtung (1), der im Einsatzzustand der Pressgutzufördervorrichtung (1) der Beschickungsöffnung (12) der Ballenpresse (10) zugewandt ist, mittels eines der ersten Seitenwandabschnitte (31, 31') des Tragelements (3) überdeckt und abgesperrt ist.

2. Ballenpresse (10) nach Anspruch 1, **dadurch gekennzeichnet, dass** die Schwenkachse (40) der Hebearmanordnung (4) horizontal sowie vertikal nach unten versetzt unterhalb der dem Pressgutübergabebereich (25) der Pressgutzufördervorrichtung (1) nächstliegenden Endkante (34') des Tragelements (3) verläuft, dass der Schwenkwinkel der Hebearmanordnung (4) zwischen 80° und 110°, vorzugsweise 90° bis 100°, beträgt und dass die Hebearmanordnung (4) in ihrer maximal angehobenen Schwenkstellung verriegelbar ist.

3. Ballenpresse (10) nach Anspruch 1 oder 2, **dadurch gekennzeichnet, dass** der Hebearmanordnung (4) wenigstens ein Kraftantrieb (42, 42'), insbesondere wenigstens eine hydraulische oder pneumatische Kolben-Zylinder-Einheit, zugeordnet ist.

4. Ballenpresse (10) nach einem der Ansprüche 1 bis 3, **dadurch gekennzeichnet, dass** außen von den durch die Seitenwandabschnitte (31, 31') des Tragelements (3) in dessen Grundstellung gebildeten ersten Seitenwänden und dem durch den Bodenabschnitt (33) gebildeten Boden des Pressgutraums (2) zusätzlich feste erste Seitenwände (21, 21') und ein fester Boden (23) angeordnet sind.

5. Ballenpresse (10) nach Anspruch 4, **dadurch gekennzeichnet, dass** eine vordere, dem Pressgutübergabebereich (25) abgewandte feste erste Seitenwand (21) des Pressgutraums (2) durch eine höhenvariable Zusatzwand (24) nach oben hin verlängerbar ist.

6. Ballenpresse (10) nach einem der Ansprüche 1 bis 5, **dadurch gekennzeichnet, dass** in dem Pressgutübergabebereich (25) ein zusätzliches Förderorgan (6) angeordnet ist.

7. Ballenpresse (10) nach Anspruch 6, **dadurch gekennzeichnet, dass** das zusätzliche Förderorgan (6) ein Rotorförderer mit einer drehantreibbaren Förderwalze (60) ist.

8. Ballenpresse (10) nach Anspruch 7, **dadurch gekennzeichnet, dass** die Förderwalze (60) mit nach außen weisenden, flexiblen oder gelenkigen Förderzinken (62) versehen ist.

9. Ballenpresse (10) nach einem der Ansprüche 1 bis 8, **dadurch gekennzeichnet, dass** die Pressgutzufördervorrichtung (1) eine Positioniermechanik (5) aufweist, welche bei in ihrer obersten Endstellung befindlicher Hebearmanordnung (4) mit dieser und/oder mit der Heberolle (43) in Eingriff bringbar ist und mittels welcher die Heberolle (43) im Sinne einer Straffung des Trag-elements (3) in Richtung nach oben und/oder zum Pressgutübergabebereich (25) hin nach außen in eine Lage verstellbar ist, in welcher der betreffende Seitenwandabschnitt (31, 31') des Tragelements (3) exakt vertikal dicht an der Beschickungsöffnung (12) liegt und diese vollständig überdeckt und verschließt.

10. Ballenpresse (10) nach Anspruch 9, **dadurch gekennzeichnet, dass** der/jeder Hebearm (41, 41') der Hebearmanordnung (4) einen längenveränderbaren, teleskopierbaren Endabschnitt (45, 45') aufweist.

11. Ballenpresse (10) nach einem der Ansprüche 1 bis 10, **dadurch gekennzeichnet, dass** das Tragelement (3) aus einem Abschnitt eines textilverstärkten Kunststoff- oder Gummiförderbandes besteht.

12. Ballenpresse (10) nach einem der Ansprüche 1 bis 11, **dadurch gekennzeichnet, dass** an der Pressgutzufördervorrichtung (1) Montageelemente (26) zur Anbringung der Pressgutzufördervorrichtung (1) an der übrigen Ballenpresse (10) vorgesehen sind.

13. Ballenpresse (10) nach Anspruch 12, **dadurch gekennzeichnet, dass** die Pressgutzufördervorrichtung (1) an der Presskammertür (14) der Ballenpresse (10) angeordnet und zusammen mit der Presskammertür (14) relativ zur übrigen Ballenpresse (10) um eine vertikale Achse verschwenkbar ist.

14. Ballenpresse (10) nach Anspruch 5, **dadurch gekennzeichnet, dass** zusätzlich ein durch eine flexible oder gelenkige Bahn gebildetes Abdeckelement (7) vorgesehen ist, welches an seiner einen, ersten Endkante (74) an einem äußeren Kopfende der Hebearmanordnung (4) fixiert ist, welches in seinem Verlauf über eine Oberkante (24') der vorderen, von dem Pressgutübergabebereich (25) abgewandten höhenvariable Zusatzwand (24) geführt ist und welches an seiner anderen, zweiten Endkante (74') mit einer in Aufwickelrichtung vorbelasteten Aufwickelrolle (71), welche an der vom Pressgutübergabebereich (25) entfernt liegenden festen ersten Seitenwand (21) angeordnet ist, verbunden ist.

15. Ballenpresse (10) nach einem der Ansprüche 1 bis 14, **dadurch gekennzeichnet, dass** im Pressgutübergabebereich (25) eine von dessen Unterkante ausgehende, sich bogenförmig zum Pressgutraum (2) hin und über einen Teil der Höhe des Pressgutraums (2) nach unten erstreckende Tragelementanlegefläche (35) angeordnet ist.

16. Ballenpresse (10) nach einem der Ansprüche 1 bis 15, **dadurch gekennzeichnet, dass** ein durch eine flexible oder gelenkige Bahn gebildetes Trennelement (16) vorgesehen ist, welches an seiner einen, ersten Endkante (16') an einem vorderen, der Beschickungsöffnung (12) der Ballenpresse (10) zugewandten Rand des Pressstempels (13) fixiert ist, welches von dort nach oben geführt ist und welches an seiner anderen, zweiten Endkante (16") oberhalb der Beschickungsöffnung (12) mit einer in Rückzugsrichtung vorbelasteten Aufwickelrolle (17) oder Federanordnung verbunden ist.

## Claims

1. A baler (10) with a press chamber (11) and with a feed opening (12) for introducing bale material (15') to be compacted into the press chamber (11), with a press ram (13) movable in the press chamber (11) in a vertical pressing direction, with a press chamber door (14) for removing a compacted bale from the press chamber (11) and with a bale material feed apparatus (1), wherein the bale material feed apparatus (1) has a bale material compartment (2), into which bale material (15') to be compacted can be introduced, and conveying means, by means of which the bale material (15') can be conveyed out of the bale material compartment (2) and fed to the feed opening (12) of the baler (10), wherein
the bale material compartment (2) is delimited by a web-shaped, flexible or articulated carrying element (3) which runs in a U-shape in a basic position and has at least two mutually opposite first side wall sections (31, 31') and a base section (33), and by at least two mutually opposite fixed second side walls (22, 22'),
for the purpose of feeding the bale material (15') to be compacted, which is located in the bale material compartment (2), to the baler (10), the carrying element (3) can be raised by means of a lifting apparatus,
**characterized in that**
the carrying element (3) is fixed at two mutually opposite horizontal end edges (34, 34'), with a lifting roller (43), which extends over the width of the carrying element (3) and bears against the underside of the carrying element (3) as a lifting apparatus and which can be pivoted by means of a lifting arm arrangement (4) of the bale material feed apparatus (1) about a pivot axis (40) running parallel to the end edges (34, 34') of the carrying element (3) below the end edges (34, 34') and by means of which the carrying element (3) can be lifted starting from the end edge (34, 34') of one of its side wall sections (31, 31'), and
that in a maximally raised end position of the carrying element (3), the latter is tensioned and a bale material transfer region (25) of the bale material feed apparatus (1), which, in the operational state of the bale material feed apparatus (1), faces the feed opening (12) of the baler (10), is covered and closed off by means of one of the first side wall sections (31, 31') of the carrying element (3).

2. The baler (10) as claimed in claim 1, **characterized in that** the pivot axis (40) of the lifting arm arrangement (4) extends horizontally as well as vertically downwardly offset below the end edge (34') of the carrying element (3) closest to the bale material transfer region (25) of the bale material feed apparatus (1), that the pivot angle of the lifting arm arrangement (4) is between 80° and 110°, preferably 90° to 100°, and that the lifting arm arrangement (4) can be locked in its maximum raised pivot position.

3. The baler (10) as claimed in claim 1 or 2, **characterized in that** the lifting arm arrangement (4) is associated with at least one power drive (42, 42'), in particular at least one hydraulic or pneumatic piston-cylinder unit.

4. The baler (10) as claimed in any one of the claims 1 to 3, **characterized in that** fixed first side walls (21, 21') and a fixed bottom (23) are additionally arranged on the outside of the first side walls formed by the side wall sections (31, 31') of the carrying element (3) in its basic position and of the bottom of the bale material compartment (2) formed by the bottom section (33).

5. The baler (10) as claimed in claim 4, **characterized in that** a front fixed first side wall (21) of the bale material compartment (2) facing away from the bale material transfer region (25) can be extended upwardly by a height-variable additional wall (24).

6. The baler (10) as claimed in any one of the claims 1 to 5, **characterized in that** an additional conveying member (6) is arranged in the bale material transfer region (25).

7. The baler (10) as claimed in claim 6, **characterized in that** the additional conveying member (6) is a rotor conveyor with a rotatably drivable conveying roller (60).

8. The baler (10) as claimed in claim 7, **characterized in that** the conveying roller (60) is provided with outwardly pointing, flexible or articulated conveying tines (62).

9. The baler (10) as claimed in any one of the claims 1 to 8, **characterized in that** the bale material feed apparatus (1) has a positioning mechanism (5) which, when the lifting arm arrangement (4) is in its uppermost end position, can be brought into engagement with said lifting arm arrangement (4) and/or with the lifting roller (43) and by means of which the lifting roller (43) can be adjusted into a position in the sense of tightening the carrying element (3) in the upward direction and/or outwardly towards the bale material transfer region (25), in which the relevant side wall section (31, 31') of the carrying element (3) lies exactly vertically tightly to the feed opening (12) and completely covers and closes it.

10. The baler (10) as claimed in claim 9, **characterized in that** the/each lifting arm (41, 41') of the lifting arm arrangement (4) has a telescopic end section (45, 45') which can be varied in length.

11. The baler (10) as claimed in any one of the claims 1 to 10, **characterized in that** the carrying element (3) comprises a section of a textile-reinforced plastic or rubber conveyor belt.

12. The baler (10) as claimed in any one of the claims 1 to 11, **characterized in that** mounting elements (26) are provided on the bale material feed apparatus (1) for attaching the bale material feed apparatus (1) to the rest of the baler (10).

13. The baler (10) as claimed in claim 12, **characterized in that** the bale material feed apparatus (1) is arranged on the press chamber door (14) of the baler (10) and can be pivoted about a vertical axis together with the press chamber door (14) relative to the rest of the baler (10).

14. The baler (10) as claimed in claim 5, **characterized in that** a cover element (7) formed by a flexible or articulated web is additionally provided, which is fixed at its one, first end edge (74) to an outer head end of the lifting arm arrangement (4), which is guided in its course over an upper edge (24') of the front additional wall (24) facing away from the bale material transfer area (25) and which is connected at its other, second end edge (74') to a winding roller (71) which is preloaded in the winding direction and which is arranged on the fixed first side wall (21) remote from the bale material transfer region (25).

15. The baler (10) as claimed in any one of the claims 1 to 14, **characterized in that** a carrying element contact surface (35) is arranged in the bale material transfer region (25), starting from the lower edge of the latter and extending in an arc towards the bale material compartment (2) and downwards over part of the height of the bale material compartment (2).

16. The baler (10) as claimed in any one of the claims 1 to 15, **characterized in that** a separating element (16) formed by a flexible or articulated web is provided, which is fixed at its one, first end edge (16') to a front edge of the press ram (13) facing the feed opening (12) of the baler (10), which is guided upwards from there and which is connected at its other, second end edge (16") above the feed opening (12) to a winding roller (17) or spring arrangement preloaded in the retraction direction.

## Revendications

1. Presse à balles (10) comprenant une chambre de pressage (11), une ouverture de chargement (12) destinée à introduire le matériau à presser (15') dans la chambre de pressage (11), un vérin de pressage (13) qui peut être déplacé dans la chambre de pressage (11) avec une direction de pressage verticale, une porte de chambre de pressage (14) destinée à retirer une balle pressée finie de la chambre de pressage (11) et un dispositif d'alimentation en matériau à presser (1), le dispositif d'alimentation en matériau à presser (1) comportant un espace de matériau à presser (2) dans lequel le matériau à presser (15') peut être introduit, et des moyens de transport permettant d'évacuer le matériau à presser (15') de l'espace de matériau à presser (2) et de l'acheminer vers l'ouverture de chargement (12) de la presse à balles (10),
l'espace de matériau à presser (2) étant formé par un élément de support en forme de bande, flexible ou articulé (3), qui s'étend en forme de U dans une position de base et qui comporte au moins deux premières portions de paroi latérale (31, 31') opposées l'une à l'autre et une portion de fond (33), et étant limité par au moins deux deuxièmes parois latérales fixes opposées (22, 22'),
l'élément de support (3) pouvant être soulevé au moyen d'un dispositif de levage afin de transporter le matériau à presser (15'), se trouvant dans la chambre de matériau à presser (2), vers la presse à balles (10),
**caractérisée en ce que**
l'élément de support (3) est fixé à deux bords d'extrémité horizontaux opposés (34, 34') et un rouleau de levage (43), qui s'étend sur la largeur de l'élément de support (3) vient en appui sur le côté inférieur de l'élément de support (3) en tant qu'unité de levage, lequel rouleau de levage peut pivoter sur un axe de pivotement (40), qui s'étend parallèlement aux bords d'extrémité (34, 34') de l'élément de support (3) et au-dessous des bords d'extrémité (34, 34'), au moyen d'un ensemble de bras de levage (4) du dispositif d'alimentation en matériau à presser (1) et permet de soulever l'élément de support (3) du bord d'extrémité (34, 34') d'une de ses portions de paroi latérale (31, 31') et
dans une position d'extrémité relevée maximale de l'élément de support (3), celui-ci est serré et une zone de transfert de matériau à presser (25) du dispositif d'alimentation en matériau à presser (1) qui, lorsque le dispositif d'alimentation en matériau à presser (1) est en cours d'utilisation, est dirigé vers l'ouverture de chargement (12) de la presse à balles (10), est recouverte et obturée au moyen d'une des premières portions de paroi latérale (31, 31') de l'élément de support (3).

2. Presse à balles (10) selon la revendication 1, **caractérisée en ce que** l'axe de pivotement (40) de l'ensemble de bras de levage (4) s'étend, en étant décalé horizontalement et verticalement vers le bas, au-dessous du bord d'extrémité (34') de l'élément de support (3) qui est le plus proche de la zone de transfert de matériau à presser (25) du dispositif d'alimentation en matériau à presser (1), **en ce que** l'angle de pivotement de l'ensemble de bras de levage (4) est compris entre 80° et 110°, de préférence va de 90° à 100°, et **en ce que** l'ensemble de bras de levage (4) peut être bloqué dans sa position de pivotement relevée maximale.

3. Presse à balles (10) selon la revendication 1 ou 2, **caractérisée en ce que** l'ensemble de bras de levage (4) est associé à au moins un entraînement mécanique (42, 42'), notamment au moins une unité à piston-cylindre hydraulique ou pneumatique.

4. Presse à balles (10) selon l'une des revendications 1 à 3, **caractérisée en ce que** des premières parois latérales fixes (21, 21') et un fond fixe (23) sont en outre disposés à l'extérieur des premières parois latérales formées par les portions de paroi latérale (31, 31') de l'élément de support (3) dans la position de base de celui-ci et du fond de l'espace de matériau à presser (2) qui est formé par la portion de fond (33).

5. Presse à balles (10) selon la revendication 4, **caractérisée en ce qu'**une première paroi latérale fixe avant (21) de la chambre de matériau à presser (2) qui est dirigée à l'opposé de la zone de transfert de matériau à presser (25) peut être prolongée vers le haut par une paroi supplémentaire (24) réglable en hauteur.

6. Presse à balles (10) selon l'une des revendications 1 à 5, **caractérisée en ce qu'**un élément de transport supplémentaire (6) est disposé dans la zone de transfert de matériau à presser (25).

7. Presse à balles (10) selon la revendication 6, **caractérisée en ce que** l'élément de transport supplémentaire (6) est un convoyeur à rotor comprenant un rouleau de transport (60) pouvant être entraîné en rotation.

8. Presse à balles (10) selon la revendication 7, **caractérisée en ce que** le rouleau de transport (60) est pourvu de dents de transport (62) flexibles ou articulées, orientées vers l'extérieur.

9. Presse à balles (10) selon l'une des revendications 1 à 8, **caractérisée en ce que** le dispositif d'alimentation en matériau à presser (1) comporte un mécanisme de positionnement (5) qui, lorsque l'ensemble de bras de levage (4) se trouve dans sa position d'extrémité supérieure, peut être amené en engagement avec celui-ci et/ou avec le rouleau de levage (43) et qui permet de déplacer le rouleau de levage (43) au sens d'un raidissement de l'élément de support (3) vers le haut et/ou vers l'extérieur vers la zone de transfert de matériau à presser (25) jusque dans une position dans laquelle la portion de paroi latérale concernée (31, 31') de l'élément de support (3) est située exactement verticalement tout contre l'ouverture de chargement (12) et la recouvre et la ferme complètement.

10. Presse à balles (10) selon la revendication 9, **caractérisée en ce que** le ou chaque bras de levage (41, 41') de l'ensemble de bras de levage (4) comporte une portion d'extrémité télescopique (45, 45') réglable en longueur.

11. Presse à balles (10) selon l'une des revendications 1 à 10, **caractérisée en ce que** l'élément de support (3) comprend une portion d'une bande transporteuse en matière synthétique ou en caoutchouc renforcée de textile.

12. Presse à balles (10) selon l'une des revendications 1 à 11, **caractérisée en ce que** des éléments de montage (26) sont prévus sur le dispositif d'alimentation en matériau à presser (1) pour fixer le dispositif d'alimentation en matériau à presser (1) au reste de la presse à balles (10).

13. Presse à balles (10) selon la revendication 12, **caractérisée en ce que** le dispositif d'alimentation en matériau à presser (1) est disposé sur la porte de chambre de pressage (14) de la presse à balles (10) et peut pivoter conjointement avec la porte de chambre de pressage (14) sur un axe vertical par rapport au reste de la presse à balles (10).

14. Presse à balles (10) selon la revendication 5, **caractérisée en ce qu'**un élément de recouvrement (7) est en outre prévu qui est formé par une bande flexible ou articulée, qui est fixé à une extrémité de tête extérieure de l'ensemble de bras de levage (4) au niveau de son premier bord d'extrémité (74), qui est guidé dans sa course sur un bord supérieur (24') de la paroi supplémentaire avant (24) réglable en hauteur, dirigée à l'opposé de la zone de transfert de matériau à presser (25), et qui est relié à son autre deuxième bord d'extrémité (74') à un rouleau d'enroulement (71) précontraint dans la direction d'enroulement et disposé sur la première paroi latérale fixe (21) située à distance de la zone de transfert de matériau à presser (25).

15. Presse à balles (10) selon l'une des revendications 1 à 14, **caractérisée en ce qu'**une surface d'application d'élément de support (35) est disposée dans la zone de transfert de matériau à presser (25) en s'étendant vers le bas depuis le bord inférieur de celle-ci de manière incurvée en direction de la chambre de matériau à presser (2) et sur une partie de la hauteur de la chambre de matériau à presser (2).

16. Presse à balles (10) selon l'une des revendications 1 à 15, **caractérisée en ce qu'**un élément de séparation (16) est prévu qui est formé par une bande flexible ou articulée et qui est fixé au niveau de son premier bord d'extrémité (16') à un bord avant du piston de presse (13) qui est dirigé vers l'ouverture de chargement (12) de la presse à balles (10), qui est guidé ensuite vers le haut et qui relié au niveau de son autre deuxième bord d'extrémité (16") au-dessus de l'ouverture de chargement (12) à un rouleau d'enroulement (17) ou un ensemble à ressort qui est précontraint dans le direction de rappel.
